# EUROPÄISCHE PATENTSCHRIFT

(11) **EP 3 662 017 B1**
(45) Veröffentlichungstag und Bekanntmachung des Hinweises auf die Patenterteilung: **31.03.2021**
(21) Anmeldenummer: 18745649.6
(22) Anmeldetag: 01.08.2018
(51) Int. Cl.: C08L 69/00

(54) **POLYCARBONAT-ZUSAMMENSETZUNG UND POLYCARBONAT-FORMMASSE MIT VERBESSERTER FLIESSFÄHIGKEIT**
POLYCARBONATE COMPOSITION AND POLYCARBONATE MOULDING WITH IMPROVED FLOWABILITY
COMPOSITION À BASE DE POLYCARBONATE ET MATIÈRE MOULABLE À BASE DE POLYCARBONATE PRÉSENTANT UNE FLUIDITÉ AMÉLIORÉE

(30) Priorität: 04.08.2017 EP 17184925
(43) Veröffentlichungstag der Anmeldung: 10.06.2020
(73) Patentinhaber: Covestro Intellectual Property GmbH & Co. KG, 51373 Leverkusen (DE)
(72) Erfinder: PUPOVAC, Kristina, 40213 Düsseldorf (DE)
(74) Vertreter: Levpat
(86) Internationale Anmeldenummer: PCT/EP2018/070851
(87) Internationale Veröffentlichungsnummer: WO 2019/025483

(56) Entgegenhaltungen:
- US-A1- 2003 181 603

## Beschreibung

Die vorliegende Erfindung betrifft eine Polycarbonat-Zusammensetzung zur Erzeugung von einer thermoplastischen Formmasse, ein Verfahren zur Herstellung der thermoplastischen Formmasse, die Formmasse selbst, die Verwendung der Zusammensetzung oder Formmasse zur Herstellung von Formkörpern und die Formkörper selbst.

Polycarbonat-Zusammensetzungen und daraus hergestellte Formmassen werden für eine Vielzahl von Anwendungen z.B. für den Kraftfahrzeugbereich, für den Bausektor, für Haushaltsgeräte sowie für die Bereiche Elektro und Elektronik eingesetzt. Über die Auswahl der Komponenten der Zusammensetzung und ihre Anteile lassen sich die Eigenschaften der Formmassen und die hergestellten Bauteile in weiten Bereichen hinsichtlich der rheologischen, thermischen und mechanischen Eigenschaften an die entsprechende Anwendung anpassen.

Eine häufige Herausforderung ist dabei die Balance zwischen der Schmelzefließfähigkeit der Formmasse und den mechanischen Eigenschaften der fertigen Bauteile, insbesondere der Zähigkeit. So lässt sich zwar bei thermoplastischen Polycarbonat-Formmassen über eine Reduktion des Molekulargewichts des Polycarbonats oder eines polymeren Blendpartners die Schmelzefließfähigkeit erhöhen, aber meistens führt diese Maßnahme zu einer Verringerung der Zähigkeit, insbesondere bei tiefen Temperaturen.

Alternativ dazu wird vielfach der Einsatz von Additiven zur Fließverbesserung beschrieben.

WO 2008/016814 offenbart PC-Formmassen, die eine Kombination aus gute Chemikalienbeständigkeit und Kratzfestigkeit aufweisen. Es wird beschrieben, dass die Chemikalienbeständigkeit durch Zusatz eines Fließverbesserers in Form eines Kohlenwasserstoffharzes nicht negativ beeinflusst wird.

US 2003/0181603 beschreibt PC-Zusammensetzungen mit einer Balance aus guter Schlagzähigkeit bei Raumtemperatur, Fließfähigkeit, Wärmeform- und Chemikalien-beständigkeit. Die Zusammensetzungen enthalten niedermolekulare Kohlenwasserstoffharze als Fließmittel. Ein Einfluss der verwendeten Harze auf die Tieftemperaturzähigkeit wird nicht beschrieben.

US 2009/0312479 offenbart talk-gefüllte, flammwidrige PC/ABS-Formmassen welche ein niedermolekularen Kohlenwasserstoffharz als Fließmittel enthalten und sich durch einen erhöhten E-Modul, Schlagverhalten und eine verbesserte Fließfähigkeit auszeichnen.

In WO 2011/014778 werden flammwidrige, thermoplastische Formmassen aus Polycarbonat und anorganischen Füllstoffen beschrieben die sich durch einen höheren E-Modul aber eine schlechtere Fließfähigkeit auszeichnen. Es wird offenbart, dass durch Zusatz eines niedermolekularen Fließmittel die Fließfähigkeit dieser Zusammensetzungen positiv beeinflusst wird, unter der Beibehaltung des hohen Elastizitätsmoduls, Schlagverhalten und gute Flammschutzeigenschaften.

US 2015/0183986 offenbart flammwidrige, mineralgefüllte PC-Zusammensetzungen mit niedermolekularem Kohlenwasserstoffharz als Fließmittel, die gute Flammschutzeigenschaften, gute Zähigkeit und Steifigkeit in Kombination mit guter Fließfähigkeit aufweisen.

EP 2 574 642 offenbart flammwidrige PC-Formmassen enthaltend Ethylen-Propylen-Octen-Maleinsäureanhydrid Copolymer die neben einem gutem Fließverhalten eine gute Schlagzähigkeit und eine gute Chemikalienbeständigkeit bei einer UL94V-0 Klassifizierung bei 1,5 mm aufweisen.

WO 2017/005739 offenbart schlagzähmodifizierte Polycarbonat-Zusammensetzungen enthaltend ein Diglycerolester als Fließhilfsmittel die sich durch gute mechanische Eigenschaften, sehr gutes rheologischen Verhalten (leicht fließend) und hohe Wärmeformbeständigkeit auszeichnen.

Die beschriebenen Formmassen bieten allerdings noch keine zufriedenstellende Balance aus verbesserter Fließfähigkeit ohne Einbußen bei der Tieftemperaturzähigkeit.

Es war daher wünschenswert, eine Zusammensetzung zur Herstellung einer thermoplastischen Formmasse bereitzustellen, bei denen die Fließfähigkeit erhöht wird bei gleichzeitigem Erhalt der Tieftemperaturzähigkeit der hergestellten Formkörper.

Es wurde überraschend gefunden, dass eine Zusammensetzung zur Erzeugung einer thermoplastischen Formmasse, wobei die Zusammensetzung folgende Bestandteile enthält oder aus diesen besteht:
A) aromatisches Polycarbonat oder Polyestercarbonat,
B) kautschukmodifiziertes Vinyl(co)polymerisat,
C) ein Kohlenwasserstoffharz enthaltend aromatische und aliphatische Struktureinheiten,
D) optional weitere von Komponente C verschiedene Additive,
dadurch gekennzeichnet, dass
bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (80-160)·10⁻³, bevorzugt (90-150)·10⁻³, besonders bevorzugt (100-130)·10⁻³ liegt,
das gewünschte Eigenschaftsprofil aufweist.

In bevorzugter Ausführungsform enthält die Zusammensetzung folgende Bestandteile:
A) 40 bis 90 Gew.-%, weiter bevorzugt 50 bis 85 Gew.-%, besonders bevorzugt 60 bis 80 Gew.-% aromatisches Polycarbonat oder Polyestercarbonat,
B) 5 bis 50 Gew.-%, weiter bevorzugt 10 bis 45 Gew.-%, besonders bevorzugt 15 bis 35 Gew.-% kautschukmodifiziertes Vinyl(co)polymerisat,
C) 0,5 bis 15 Gew.-%, weiter bevorzugt 1 bis 12 Gew.-%, besonders bevorzugt 2 bis 8 Gew.-% eines Kohlenwasserstoffharzes enthaltend aromatische und aliphatische Struktureinheiten,
D) 0 bis 20 Gew.-%, weiter bevorzugt 0,1 bis 15 Gew.-%, besonders bevorzugt 0,2 bis 10 Gew.-% weitere von Komponente C verschiedene Additive,
dadurch gekennzeichnet, dass
bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (80-160)·10⁻³, weiter bevorzugt (90-150)·10⁻³, besonders bevorzugt (100-130)·10⁻³ liegt,
Weiterhin war es wünschenswert, dass die Formmasse eine geringe Empfindlichkeit gegenüber hydrolytischem Polymerabbau zeigt.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Das gewichtsgemittelte Molekulargewicht M_{w} der aromatischen Polycarbonate und Polyestercarbonate liegt im Bereich von 15.000 bis 35.000, bevorzugt im Bereich von 20.000 bis 33.000, weiter bevorzugt 23.000 bis 31.000, bestimmt durch GPC (Gelpermeationschromatographie in Methylenchlorid mit Polycarbonat als Standard).

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 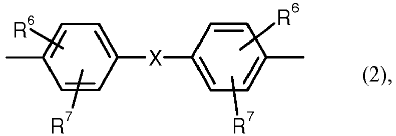 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (3a)

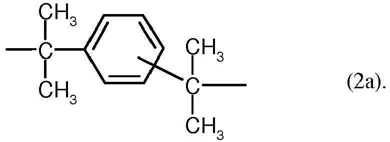

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Am stärksten bevorzugt ist 2,2-Bis-(4-hydroxyphenyl)-propan (Bisphenol A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1 -Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

### Komponente B

Bei Komponente B handelt es sich um kautschukmodifiziertes Vinyl(co)polymer.

Die Komponente B umfasst ein oder mehrere Pfropfpolymerisate als Komponente B.1) und nicht chemisch an einen Kautschuk gebundenes oder in diesem Kautschuk eingeschlossenes kautschukfreies Vinyl(co)polymerisat als Komponente B.2).

### Komponente B.1)

Die Komponente B.1) umfasst ein oder mehrere Pfropfpolymerisate von
B.1.1 10 bis 80 Gew.-%, vorzugsweise 20 bis 70 Gew.-%, besonders bevorzugt 25 bis 55 Gew.-% mindestens eines Vinylmonomeren auf
B.1.2 20 bis 90 Gew.-%, vorzugsweise 30 bis 80 Gew.-%, besonders bevorzugt 45 bis 75 Gew.-% einer oder mehrerer kautschukartiger, in bevorzugter Ausführungsform partikulärer Pfropfgrundlagen, vorzugsweise mit Glasübergangstemperaturen < 10°C, weiter bevorzugt < 0°C, besonders bevorzugt < -20°C,
wobei die aus den Monomeren B.1.1) gebildeten Polymerketten chemisch an die Pfropfgrundlage B.1.2) gebunden sind oder in der Pfropfgrundlage so eingeschlossen sind, dass sie bei der Herstellung und Verarbeitung der erfindungsgemäßen Zusammensetzungen nicht aus dieser Pfropfgrundlage austreten.

Die Glasübergangstemperatur wird mittels dynamischer Differenzkalorimetrie (DSC) gemäß der Norm DIN EN 61006 (Version von 2004) bei einer Heizrate von 10 K/min mit Definition der Tg als Mittelpunkttemperatur (Tangentenmethode) bestimmt.

Die bevorzugten partikulären Pfropfgrundlagen B.1.2) haben im Allgemeinen eine mittlere Teilchengröße (d50-Wert) von 0,05 bis 10 µm, vorzugsweise 0,1 bis 5 µm, besonders bevorzugt 0,2 bis 1,5 µm.

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1.1 sind vorzugsweise Gemische aus
B.1.1.1 50 bis 99 Gew.-%, bevorzugt 65 bis 85 Gew.-%, bevorzugt 70 bis 80 Gew.-%, jeweils bezogen auf die Gesamtheit der Monomere der Pfropfhülle B.1.1, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat und Butylacrylat, und
B.1.1.2 1 bis 50 Gew.-%, bevorzugt 15 bis 35 Gew.-%, besonders bevorzugt 20 bis 30 Gew.-%, jeweils bezogen auf die Gesamtheit der Monomere der Pfropfhülle B.1.1, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol, α-Methylstyrol und Methylmethacrylat. Bevorzugte Monomere B.1.1.2 sind ausgewählt aus mindestens einem der Monomere Acrylnitril, n-Butylacrylat, Maleinsäureanhydrid und Methylmethacrylat.

Besonders bevorzugte Monomere sind B.1.1.1 Styrol und B.1.1.2 Acrylnitril.

Für die Pfropfpolymerisate B.1) geeignete Pfropfgrundlagen B.1.2) sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/ Acrylat - Kompositkautschuke.

Bevorzugte Pfropfgrundlagen B.1.2) sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2).

Besonders bevorzugt als Pfropfgrundlage B.1.2) ist reiner Polybutadienkautschuk.

Besonders bevorzugte Pfropfpolymerisate B.1) sind beispielsweise ABS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B.1) werden durch radikalische Polymerisation, z.B. durch Emulsions-, Suspensions-, Lösungs- oder Massepolymerisation hergestellt.

In bevorzugter Ausführungsform ist in der Komponente B.1) Pfropfpolymerisat hergestellt in Massepolymerisation enthalten.

Der Gelgehalt der Pfropfgrundlage B.1.2) wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Bei der Pfropfung werden die Pfropfmonomere B.1.1) bekanntlich nicht unbedingt vollständig auf die Pfropfgrundlage aufgepfropft. Produkte von Pfropfungsreaktionen enthalten insofern oft noch signifikante Anteile an freiem (d.h. nicht chemisch an die Pfropfgrundlage gebundenem und nicht in die Pfropfgrundlage irreversibel eingeschlossenem) Copolymerisat mit einer Zusammensetzung analog zu dem der Pfropfhülle. Im Sinne der vorliegenden Erfindung wird unter Komponente B.1) ausschließlich das wie oben definierte Pfropfpolymer verstanden, während das herstellungsbedingt enthaltene nicht chemisch an die Pfropfgrundlage gebundene und nicht in dieser Pfropfgrundlage eingeschlossene Copolymerisat der Komponente B.2) zugeordnet wird.

Der Anteil an diesem freiem Copolymer in Produkten von Pfropfungsreaktionen lässt sich aus deren Gelgehalten ermitteln (Anteil an freiem Copolymer = 100 Gew.-% - Gel-Gehalt des Produktes in Gew.-%), wobei der Gelgehalt bei 25°C in einem geeigneten Lösungsmittel (wie etwa Aceton, M. Hoffmann, H. Krömer, R. Kuhn, Polymeranalytik I und II, Georg Thieme-Verlag, Stuttgart 1977) als in diesen Lösungsmitteln unlöslicher Anteil bestimmt wird.

Vorzugsweise weist das Pfropfpolymerisat aus den Komponenten B.1.1 und B.1.2 eine Kern-Schale-Struktur auf, wobei die Komponente B.1.1 die Schale bildet (auch als Hülle bezeichnet) und die Komponente B.1.2) den Kern ausbildet (siehe bspw. Ullmann's Encyclopedia of Industrial Chemistry, VCH-Verlag, Vol. A21, 1992, Seite 635 und Seite 656).

In bevorzugter Ausführungsform enthält die Komponente B.1) mit den Vinylmonomeren B.1.1) gepfropfte Polybutadien-haltige Kautschukpartikel, die Inklusionen aus Vinyl(co)polymerisat bestehend aus den Vinylmonomeren B.1.1) enthalten.

In einer weiteren bevorzugten Ausführungsform werden Mischungen aus verschiedenen Pfropfpolymerisaten B.1) in der Komponente B eingesetzt, wobei sich die Pfropfpolymerisate beispielsweise in der Art der Herstellung und/oder in der Art der Pfropfgrundlage B.1.2) und/oder in der Art der Pfropfhülle B.1.1) unterscheiden können.

### Komponente B.2)

Die Zusammensetzung enthält als weitere Komponente B.2) ein oder mehrere kautschukfreie (Co)-Polymerisate von mindestens einem Vinylmonomeren, bevorzugt ausgewählt aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren.

Insbesondere geeignet sind als Komponente B.2) (Co)Polymerisate aus
B.2.1) 50 bis 99 Gew.-%, bevorzugt 65 bis 85 Gew.-%, besonders bevorzugt 70 bis 80 Gew.-% bezogen auf das (Co)Polymerisat B.2) mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und
B.2.2) 1 bis 50 Gew.-%, bevorzugt 15 bis 35 Gew.-%, besonders bevorzugt 20 bis 30 Gew.-% bezogen auf das (Co)Polymerisat B.2) mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B.2) sind harzartig, thermoplastisch und kautschukfrei. Besonders bevorzugt ist das Copolymerisat aus B2.1) Styrol und B2.2) Acrylnitril.

Derartige (Co)Polymerisate B.2) sind bekannt und lassen sich durch radikalische Polymerisation, insbesondere durch Emulsions-, Suspensions-, Lösungs- oder Massepolymerisation herstellen.

Die (Co)Polymerisate B.2) besitzen ein gewichtsgemitteltes Molekulargewicht (Mw), bestimmt per Gelpermeationschromatographie mit Polystyrol als Standard, von 50000 bis 200000 g/mol, bevorzugt von 70000 bis 170000 g/mol, besonders bevorzugt von 80000 bis 130000 g/mol.

### Komponente C

Als Komponente C werden niedermolekulare Kohlenwasserstoffharze enthaltend aromatische und aliphatische Struktureinheiten eingesetzt.

Bei den niedermolekularen Kohlenwasserstoffharzen handelt es sich um synthetische Harze.

Die synthetischen Kohlenwasserstoffharze werden durch die Polymerisation von aromatischen (C9) Kohlenwasserstoffen (z. B. Nebenprodukte aus der Erdölverarbeitung) oder Gemischen solcher Kohlenwasserstoffe, hergestellt. Die C9-Fraktion umfasst aromatische Verbindungen wie Indene, Methylstyrole, usw. Die Harze können zusätzlich teilweise hydriert sein.

Die niedermolekularen Harze enthalten auch Anteile von aliphatischen (C5) Struktureinheiten. Auch diese stammen z. B. aus der Erdölproduktion und umfassen ungesättigte Olefine bzw. Diolefine wie Pentene, Pentadiene und zyklische Olefine/Diolefine wie z.B. Cyclopentene, Cyclopentadiene, Dicyclopentadiene.

Die erfindungsgemäß eingesetzten Kohlenwasserstoffharze zeichnen sich durch einen hohen Anteil an aromatischen Struktureinheiten aus.

Dieser Anteil lässt sich in geeigneter Weise durch Fourier-Transform-Infrarotspektroskopie (FTIR-Spektroskopie) charakterisieren. Die erfindungsgemäß eingesetzten Kohlenwasserstoffharze weisen im FTIR-Spektrum ein Verhältnis der integrierten Peakfläche im Wellenzahlbereich 1630 cm-1 bis 1560 cm-1 zu der integrierten Peakfläche des FTIR-Spektrums im Wellenzahlbereich 1520 cm-1 bis 1350 cm-1 von (80-160)·10⁻³, bevorzugt (90-150)·10⁻³, besonders bevorzugt (100-130)·10⁻³ auf.

Die Kohlenwasserstoffharze sind thermoplastische, chemisch sehr beständige, insbesondere nicht verseifbare, unpolare Oligo- bzw. Polymere mit gewichtsgemittelten Molmassen Mw von bevorzugt unter 3000g/mol, weiter bevorzugt unter 2000 g/mol, besonders bevorzugt unter 1000 g/mol.

Die mittleren Molmassen der Komponente C werden mit Gelpermeationschromatographie (GPC) mit Tetrahydrofuran (THF) als Eluierungsmittel und Polystyrol als Standard bestimmt.

Die durch Polymerisation der (z. B. petrostämmigen) aromatischen C9-Fraktionen und aliphatischen C5-Fraktionen hergestellten Harze sind kommerziell unter dem Namen Picco™ (Fa. Eastman Chemical) bekannt.

Die Harze haben bevorzugt Erweichungspunkte gemessen nach ASTM E 28 von 80-115 °C, weiter bevorzugt von 90-110 °C.

### Komponente D

Die Zusammensetzung kann als Komponente D des Weiteren handelsübliche Additive enthalten, wobei insbesondere und bevorzugt Additive ausgewählt aus der Gruppe der Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmittel (beispielsweise Pentaerythrittetrastearat), Nukleiermittel, Antistatika, Leitfähigkeitsadditive, Stabilisatoren (z.B. Hydrolyse-, Wärmealterungs- und UV-Stabilisatoren sowie Umesterungsinhibitoren und Säure-/Basenquencher), Fließfähigkeitspromotoren, Verträglichkeitsvermittler, weitere von Komponente B verschiedene Schlagzähigkeitsmodifikatoren (sowohl mit als auch ohne Kern-Schale-Struktur), weitere polymere Bestandteile (beispielsweise funktionelle Blendpartner), Füll- und Verstärkungsstoffe (beispielsweise Karbonfasern, Glasfasern, Talk, Glimmer, Kaolin, CaCO₃) sowie Farbstoffe und Pigmente (beispielsweise Titandioxid oder Eisenoxid) in Frage kommen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, weiteren Schlagzähigkeitsmodifikatoren, weiteren polymeren Bestandteilen, Farbstoffen und Pigmenten.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten und Schwefel-basierten Co-Stabilisatoren.

In besonders bevorzugter Ausführungsform enthält die Zusammensetzung als Stabilisator mindestens einen Vertreter ausgewählt aus der Gruppe bestehend aus Octadecyl-3-(3,5-di-tert-butyl-4-hydroxyphenyl)propionat und Tris(2,4-di-tert-butylphenyl)phosphit.

In besonders bevorzugter Ausführungsform enthält die Zusammensetzung als Komponente D) mindestens einen Vertreter ausgewählt aus der Gruppe bestehend aus Gleit- und Entformungsmitteln, Stabilisatoren, Fließfähigkeitspromotoren sowie Farbstoffen und Pigmenten und ist frei von weiteren Polymeradditiven gemäß Komponente D).

In einer weiter bevorzugten Ausführungsform enthält die Zusammensetzung als Komponente D) mindestens ein Entformungsmittel, mindestens einen Stabilisator und optional mindestens einen Farbstoff und/oder ein Pigment und ist frei von weiteren Polymeradditiven gemäß Komponente D).

### Herstellung der Formmassen und Formkörper

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 21 der vorliegenden Erfindung beschrieben:
1. Zusammensetzung zur Erzeugung einer thermoplastischen Formmasse, wobei die Zusammensetzung folgende Bestandteile enthält:
   A) aromatisches Polycarbonat oder Polyestercarbonat,
   B) kautschukmodifiziertes Vinyl(co)polymerisat,
   C) ein Kohlenwasserstoffharz enthaltend aromatische und aliphatische Struktureinheiten,
   D) optional weitere von Komponente C verschiedene Additive,
   dadurch gekennzeichnet, dass
   bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (80-160)·10⁻³ liegt.
2. Zusammensetzung gemäß Ausführungsform 1, enthaltend
   40 bis 90 Gew.-% der Komponente A,
   5 bis 50 Gew.-% der Komponente B,
   0,5 bis 15 Gew.-% der Komponente C und
   0 bis 20 Gew.-% der Komponente D.
3. Zusammensetzung gemäß Ausführungsform 1 oder 2, wobei die Komponente A aromatisches Polycarbonat auf Basis von Bisphenol A ist.
4. Zusammensetzung gemäß einer der vorherigen Ausführungsformen, wobei die Komponente B mit Vinylmonomeren gepfropfte Polybutadien-haltige Kautschukpartikel enthält, die Inklusionen aus Vinyl(co)polymerisat bestehend aus den Vinylmonomeren enthalten.
5. Zusammensetzung gemäß einer der vorherigen Ausführungsformen, wobei die Komponente B kautschukmodifiziertes Pfropfpolymerisat hergestellt in Massepolymerisation enthält.
6. Zusammensetzung gemäß einer der vorherigen Ausführungsformen, wobei die Komponente C ein gewichtsgemitteltes Molekulargewicht Mw von unter 3000 g/mol aufweist.
7. Zusammensetzung gemäß einer der vorherigen Ausführungsformen, wobei die Komponente C einen Erweichungspunkt gemäß ASTM E 28 von 80-115 °C aufweist.
8. Zusammensetzung gemäß einer der vorherigen Ausführungsformen, wobei die Komponente C einen Erweichungspunkt gemäß ASTM E 28 von 90-110 °C aufweist.
9. Zusammensetzung gemäß einer der vorherigen Ausführungsformen, wobei bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (90-150)·10⁻³ liegt.
10. Zusammensetzung gemäß einer der vorherigen Ausführungsformen, wobei bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (100-130)·10⁻³ liegt.
11. Zusammensetzung gemäß einer der vorherigen Ausführungsformen, wobei die Komponente C ein gewichtsgemitteltes Molekulargewicht Mw von unter 2000 g/mol aufweist.
12. Zusammensetzung gemäß einer der vorherigen Ausführungsformen, wobei die Komponente C ein gewichtsgemitteltes Molekulargewicht Mw von unter 1000 g/mol aufweist.
13. Zusammensetzung gemäß einer der vorherigen Ausführungsformen, enthaltend
   50 bis 85 Gew.-% der Komponente A,
   10 bis 45 Gew.-% der Komponente B,
   1 bis 12 Gew.-% der Komponente C und
   0,1 bis 15 Gew.-% der Komponente D.
14. Zusammensetzung gemäß einer der vorherigen Ausführungsformen, enthaltend 60 bis 80 Gew.-% der Komponente A,
   15 bis 35 Gew.-% der Komponente B,
   2 bis 8 Gew.-% der Komponente C und
   0,2 bis 10 Gew.-% der Komponente D.
15. Zusammensetzung gemäß einer der vorherigen Ausführungsformen, enthaltend als Komponente D mindestens einen Zusatzstoff ausgewählt aus der Gruppe, die Flammschutzmittel, Antidrippingmittel, Flammschutzsynergisten, Rauchinhibitoren, Gleit- und Entformungsmittel, Nukleiermittel, Antistatika, Leitfähigkeitsadditive, Stabilisatoren, Fließfähigkeitspromotoren, Verträglichkeitsvermittler, weitere von Komponente B verschiedene Schlagzähigkeitsmodifikatoren, weitere polymere Blendpartner, Füll- und Verstärkungsstoffe sowie Farbstoffe und Pigmente umfasst.
16. Zusammensetzung gemäß einer der vorherigen Ausführungsformen, wobei die Zusammensetzung nur aus den Komponenten A) bis D) besteht.
17. Verfahren zur Herstellung einer Formmasse, dadurch gekennzeichnet, dass die Bestandteile einer Zusammensetzung nach einer der Ausführungsformen 1 bis 16 bei einer Temperatur von 200 bis 320 °C miteinander vermischt werden.
18. Verfahren gemäß Ausführungsform 17, wobei die Temperatur 240 °C bis 300 °C beträgt.
19. Formmasse erhalten oder erhältlich nach einem Verfahren gemäß einer der Ausführungsformen 17 oder 18.
20. Verwendung einer Zusammensetzung gemäß einer der Ausführungsformen 1 bis 16 oder einer Formmasse gemäß Ausführungsform 19 zur Herstellung von spritzgegossenen oder thermogeformten Formkörpern.
21. Formkörper erhältlich aus einer Zusammensetzung gemäß einer der Ausführungsformen 1 bis 16 oder einer Formmasse gemäß Ausführungsform 19.

### Beispiele

### Komponente A:

Lineares Polycarbonat auf Basis Bisphenol-A mit einem gewichtsgemittelten Molekulargewicht Mw von 26000 g/mol (bestimmt durch GPC in Methylenchlorid mit Polycarbonat als Standard).

### Komponente B:

Acrylnitril-Butadien-Styrol (ABS)-Polymer, hergestellt im Masse-Polymerisationsverfahren, welches eine disperse Phase aus Polybutadien-haltigen Kautschukpartikeln mit Inklusionen aus Styrol-Acrylnitril-Copolymerisat und eine Styrol-Acrylnitril-Copolymerisat-Matrix enthält, ein A:B:S-Verhältnis von 23:10:67 Gew.-% und einen Gelgehalt, bestimmt als in Aceton unlöslicher Anteil, von 20 Gew.-% aufweist. Das freie, das heißt in Aceton lösliche Styrol-Acrylnitril-Copolymer in Komponente B weist ein gewichtsgemitteltes Molekulargewicht M_{w} (gemessen per GPC in Aceton als Lösungsmittel mit Polystyrol als Standard) von 165 kg/mol auf. Die mittlere Kautschukpartikelgröße D50, gemessen per Ultrazentrifugation, beträgt 0,85 µm. Die Schmelzeflussrate (MVR) der Komponente B, gemessen nach ISO 1133 bei 220°C mit einer Stempellast von 10 kg, beträgt 6,7 ml/10 min.

### Komponente C-1:

Kristallex™ F115 (Eastman): Gemisch aus monomeren aromatischen Kohlenwasserstoffharzen mit einem gewichtsgemittelten Molekulargewicht Mw von 2000 g/mol (bestimmt durch GPC in THF als Eluierungsmittel und Polystyrol als Standard). Das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 beträgt 170·10⁻³. Der Erweichungspunkt nach ASTM E28 (Version von 2004) beträgt 117°C.

### Komponente C-2:

Picco™ AR100 (Eastman): Gemisch aus aromatischen und aliphatischen Kohlenwasserstoffharzen mit einem gewichtsgemittelten Molekulargewicht Mw von 800 g/mol (bestimmt durch GPC in THF als Eluierungsmittel und Polystyrol als Standard). Das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 beträgt 120·10⁻³. Der Erweichungspunkt nach ASTM E28 (Version von 2004) beträgt 100°C.

### Komponente C-3:

Arkon™ P-125 (Arakawa Europe GmbH): Vollständig hydrierte alicyclische Kohlenwasserstoffharze mit einem gewichtsgemittelten Molekulargewicht Mw von 1400 g/mol (bestimmt durch GPC in THF als Eluierungsmittel und Polystyrol als Standard). Das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 beträgt 20·10⁻³. Der Erweichungspunkt nach ASTM E28 (Version von 2004) beträgt 125°C.

### Komponente D:

### Thermostabilisator, Irganox™ B900

(Gemisch aus 80% Irgafos™ 168 (Tris(2,4-di-tert-butyl-phenyl)-phosphit) und 20% Irganox™ 1076 (2,6-Di-tert-butyl-4-(octadecanoxycarbonylethyl)phenol) (Hersteller: BASF AG)

### Komponente E:

Pentaerythrittetrastearat als Gleit-/Entformungsmittel

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C. Die Formkörper wurden bei einer Massetemperatur von 260°C und einer Werkzeugtemperatur von 80°C auf einer Spritzgießmaschine Typ Arburg 270 E hergestellt.

Die Schmelzeviskosität wurde gemäß ISO 11443 (Version von 2014) bei einer Temperatur von 260°C und einer Scherrate von 1000 s⁻¹ ermittelt.

Der Schmelzflussrate (MVR) wurde gemäß ISO 1133 (Version von 2012) bei 260°C unter Verwendung einer Stempellast von 5kg nach einer 5-minütigen Verweilzeit bestimmt.

Als Maß für die Hydrolysebeständigkeit diente die Zunahme des MVRs gemessen nach ISO 1133 (Version von 2012) bei 260°C mit einer Stempellast von 5 kg nach einer Lagerung des Granulats bei 95°C und 100% relativer Luftfeuchtigkeit für 7 Tage.

Die Kerbschlagzähigkeit nach IZOD wurde bei -30°C gemäß ISO 180/1A (Version von 1982) an jeweils zehn Prüfkörpern der Abmessung 80 mm x 10 mm x 4mm bestimmt.

Der Durchstoßversuch wurde bei -30°C in Anlehnung an ISO 6603-2 (Version von 2000, in Anlehnung bedeutet, dass keine Sichtkontrolle der Probekörper durchgeführt wurde) an Prüfkörpern der Abmessung 60 mm x 60 mm x 2 mm durchgeführt.

Die Reißdehnung wurde gemäß ISO 527 (Version von 1996) bei Raumtemperatur bestimmt.

**Tabelle 1: Formmassen und ihre Eigenschaften**

| **Komponenten [Gew.-Teile]** | **1 (Vgl.)** | **2 Vgl.** | **3** | **4 (Vgl.)** |
|---|---|---|---|---|
| A | 70,0 | 70,0 | 70,0 | 70,0 |
| B | 30,0 | 30,0 | 30,0 | 30,0 |
| C-1 | - | 5,0 | - | - |
| C-2 | - | - | 5,0 | - |
| C-3 | - | - | - | 5,0 |
| D | 0,10 | 0,10 | 0,10 | 0,10 |
| E | 0,74 | 0,74 | 0,74 | 0,74 |

| **Eigenschaften** | | | | |
|---|---|---|---|---|
| Izod Kerbschlagzähigkeit (-30°C) [kJ/m²] | 40 | 26 | 39 | 20 |
| Durchstoßversuch (-30°C) Gesamtenergie [J] | 55 | 51 | 55 | 19 |
| Reißdehnung [%] | 111 | 110 | 102 | 76 |
| MVR (260°C/5kg/5min) [cm³/10min] | 19 | 23 | 23 | 23 |
| MVR [cm³/10min] (nach Lagerung 7 Tage, 95°C/100% rel. Luftfeuchtigkeit; 260°C/5kg/5min) | 20 | 25 | 24 | 30 |
| MVR-Zunahme [%] | 5 | 9 | 4 | 30 |
| Schmelzeviskosität [Pas] | 230 | 195 | 196 | 190 |
| Reduktion der Viskosität [%] | - | 15 | 15 | 17 |

Aus Tabelle 1 ist ersichtlich, dass nur die Zusammensetzung enthaltend niedermolekulare Harze dessen Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (80-160)·10⁻³ liegt, die erfindungsgemäße Aufgabe löst, d.h. nur die erfindungsgemäße Zusammensetzung, gemäß Beispiel 3 (Tabelle 1), eine verbesserte Fließfähigkeit (niedrigere Schmelzeviskosität, höherer MVR Wert ohne Lagerung) bei gleichzeitiger Erhalt der Tieftemperaturzähigkeit, Hydrolysebeständigkeit und hoher Reißdehnung, aufweist.

## Patentansprüche

1. Zusammensetzung zur Erzeugung einer thermoplastischen Formmasse, wobei die Zusammensetzung folgende Bestandteile enthält:
A) aromatisches Polycarbonat oder Polyestercarbonat,
B) kautschukmodifiziertes Vinyl(co)polymerisat,
C) ein Kohlenwasserstoffharz enthaltend aromatische und aliphatische Struktureinheiten,
D) optional weitere von Komponente C verschiedene Additive,
**dadurch gekennzeichnet, dass**
bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (80-160)·10⁻³ liegt.

2. Zusammensetzung gemäß Anspruch 1, enthaltend
40 bis 90 Gew.-% der Komponente A,
5 bis 50 Gew.-% der Komponente B,
0,5 bis 15 Gew.-% der Komponente C und
0 bis 20 Gew.-% der Komponente D.

3. Zusammensetzung gemäß Anspruch 1 oder 2, wobei die Komponente A aromatisches Polycarbonat auf Basis von Bisphenol A ist.

4. Zusammensetzung gemäß einem der vorherigen Ansprüche, wobei die Komponente B kautschukmodifiziertes Pfropfpolymerisat hergestellt in Massepolymerisation enthält.

5. Zusammensetzung gemäß einem der vorherigen Ansprüche, wobei die Komponente C ein gewichtsgemitteltes Molekulargewicht Mw von unter 3000 g/mol aufweist, wobei Mw mit Gelpermeationschromatographie mit Tetrahydrofuran als Eluierungsmittel und Polystyrol als Standard bestimmt wird.

6. Zusammensetzung gemäß einem der vorherigen Ansprüche, wobei die Komponente C einen Erweichungspunkt gemäß ASTM E 28 von 80-115 °C aufweist.

7. Zusammensetzung gemäß einem der vorherigen Ansprüche, wobei bei der Komponente C das Verhältnis der integrierten Peakfläche des FTIR-Spektrums im Wellenzahlbereich 1630 cm-1 bis 1560 cm-1 zu der integrierten Peakfläche des FTIR-Spektrums im Wellenzahlbereich 1520 cm-1 bis 1350 cm-1 im Bereich von (100-130)·10⁻³ liegt.

8. Zusammensetzung gemäß einem der vorherigen Ansprüche, wobei die Komponente C ein gewichtsgemitteltes Molekulargewicht Mw von unter 1000 g/mol aufweist, wobei Mw mit Gelpermeationschromatographie mit Tetrahydrofuran als Eluierungsmittel und Polystyrol als Standard bestimmt wird.

9. Zusammensetzung gemäß einem der vorherigen Ansprüche, enthaltend
60 bis 80 Gew.-% der Komponente A,
15 bis 35 Gew.-% der Komponente B,
2 bis 8 Gew.-% der Komponente C und
0,2 bis 10 Gew.-% der Komponente D.

10. Zusammensetzung gemäß einem der vorhergehenden Ansprüche, enthaltend als Komponente D mindestens einen Zusatzstoff ausgewählt aus der Gruppe, die Flammschutzmittel, Antidrippingmittel, Flammschutzsynergisten, Rauchinhibitoren, Gleit- und Entformungsmittel, Nukleiermittel, Antistatika, Leitfähigkeitsadditive, Stabilisatoren, Fließfähigkeitspromotoren, Verträglichkeitsvermittler, weitere von Komponente B verschiedene Schlagzähigkeitsmodifikatoren, weitere polymere Blendpartner, Füll- und Verstärkungsstoffe sowie Farbstoffe und Pigmente umfasst.

11. Zusammensetzung gemäß einem der vorherigen Ansprüche, wobei die Zusammensetzung nur aus den Komponenten A) bis D) besteht.

12. Verfahren zur Herstellung einer Formmasse, **dadurch gekennzeichnet, dass** die Bestandteile einer Zusammensetzung nach einem der Ansprüche 1 bis 11 bei einer Temperatur von 200 bis 320 °C miteinander vermischt werden.

13. Formmasse erhalten oder erhältlich nach einem Verfahren gemäß Anspruch 12.

14. Verwendung einer Zusammensetzung gemäß einem der Ansprüche 1 bis 11 oder einer Formmasse gemäß Anspruch 13 zur Herstellung von spritzgegossenen oder thermogeformten Formkörpern.

15. Formkörper erhältlich aus einer Zusammensetzung gemäß einem der Ansprüche 1 bis 11 oder einer Formmasse gemäß Anspruch 13.

## Claims

1. Composition for producing a thermoplastic moulding material, wherein the composition contains the following constituents:
A) aromatic polycarbonate or polyestercarbonate,
B) rubber-modified vinyl (co)polymer,
C) a hydrocarbon resin containing aromatic and aliphatic structural units,
D) optionally further additives distinct from component C,
**characterized in that**
for the component C the ratio of the integrated peak area of the FTIR spectrum in the wavenumber range 1630 cm-1 to 1560 cm-1 to the integrated peak area of the FTIR spectrum in the wavenumber range 1520 cm-1 to 1350 cm-1 is in the range of (80-160)·10⁻³.

2. Composition according to Claim 1, containing
40% to 90% by weight of the component A,
5% to 50% by weight of the component B,
0.5% to 15% by weight of the component C and
0% to 20% by weight of the component D.

3. Composition according to Claim 1 or 2, wherein the component A is aromatic polycarbonate based on bisphenol A.

4. Composition according to any of the preceding claims, wherein the component B contains rubber-modified graft polymer produced by bulk polymerization.

5. Composition according to any of the preceding claims, wherein the component C has a weight-average molecular weight Mw of less than 3000 g/mol, wherein Mw is determined by gel permeation chromatography with a tetrahydrofuran eluent and a polystyrene standard.

6. Composition according to any of the preceding claims, wherein the component C has a softening point according to ASTM E 28 of 80-115°C.

7. Composition according to any of the preceding claims, wherein for the component C the ratio of the integrated peak area of the FTIR spectrum in the wavenumber range 1630 cm-1 to 1560 cm-1 to the integrated peak area of the FTIR spectrum in the wavenumber range 1520 cm-1 to 1350 cm-1 is in the range of (100-130)·10⁻³.

8. Composition according to any of the preceding claims, wherein the component C has a weight-average molecular weight Mw of less than 1000 g/mol, wherein Mw is determined by gel permeation chromatography with a tetrahydrofuran eluent and a polystyrene standard.

9. Composition according to any of the preceding claims, containing
60% to 80% by weight of the component A,
15% to 35% by weight of the component B,
2% to 8% by weight of the component C and
0.2% to 10% by weight of the component D.

10. Composition according to any of the preceding claims, containing as component D at least one additive selected from the group comprising flame retardants, anti-drip agents, flame retardant synergists, smoke inhibitors, lubricants and demoulding agents, nucleating agents, antistats, conductivity additives, stabilizers, flow promoters, compatibilizers, further impact modifiers distinct from component B, further polymeric blend partners, fillers and reinforcers and dyes and pigments.

11. Composition according to any of the preceding claims, wherein the composition consists solely of the components A) to D).

12. Process for producing a moulding material, **characterized in that** the constituents of a composition according to any of Claims 1 to 11 are mixed with one another at a temperature of 200°C to 320°C.

13. Moulding material obtained or obtainable by a process according to Claim 12.

14. Use of a composition according to any of Claims 1 to 11 or a moulding material according to Claim 13 for producing injection moulded or thermoformed shaped articles.

15. Shaped article obtainable from a composition according to any of Claims 1 to 11 or a moulding material according to Claim 13.

## Revendications

1. Composition pour la production d'une masse à mouler thermoplastique, la composition contenant les ingrédients suivants :
A) un polycarbonate ou polyestercarbonate aromatique,
B) un (co)polymérisat vinylique modifié par un caoutchouc,
C) une résine d'hydrocarbure contenant des motifs structuraux aromatiques et aliphatiques,
D) éventuellement des additifs supplémentaires différents du composant C,
**caractérisée en ce que**
en ce qui concerne le composant C, le rapport de la surface de pic intégrée du spectre FTIR dans le domaine de longueurs d'onde de 1 630 cm⁻¹ à 1 560 cm⁻¹ sur la surface de pic intégrée du spectre FTIR dans le domaine de longueurs d'onde de 1 520 cm⁻¹ à 1 350 cm⁻¹ se situe dans la plage de (80 à 160)·10⁻³.

2. Composition selon la revendication 1, contenant
40 à 90 % en poids du composant A,
5 à 50 % en poids du composant B,
0,5 à 15 % en poids du composant C et
0 à 20 % en poids du composant D.

3. Composition selon la revendication 1 ou 2, le composant A étant un polycarbonate aromatique à base de bisphénol A.

4. Composition selon l'une quelconque des revendications précédentes, le composant B contenant un polymérisat greffé modifié par un caoutchouc préparé dans une polymérisation en masse.

5. Composition selon l'une quelconque des revendications précédentes, le composant C présentant un poids moléculaire moyen en poids Mw inférieur à 3 000 g/mole, Mw étant déterminé par chromatographie à perméation de gel avec du tétrahydrofuranne en tant qu'agent d'élution et du polystyrène en tant que référence.

6. Composition selon l'une quelconque des revendications précédentes, le composant C présentant un point de ramollissement selon la norme ASTM E 28 de 80 à 115 °C.

7. Composition selon l'une quelconque des revendications précédentes, en ce qui concerne le composant C, le rapport de la surface de pic intégrée du spectre FTIR dans le domaine de longueurs d'onde de 1 630 cm⁻¹ à 1 560 cm⁻¹ sur la surface de pic intégrée du spectre FTIR dans le domaine de longueurs d'onde de 1 520 cm⁻¹ à 1 350 cm⁻¹ se situant dans la plage de (100 à 130)·10⁻³.

8. Composition selon l'une quelconque des revendications précédentes, le composant C présentant un poids moléculaire moyen en poids Mw inférieur à 1 000 g/mole, Mw étant déterminé par chromatographie à perméation de gel avec du tétrahydrofuranne en tant qu'agent d'élution et du polystyrène en tant que référence.

9. Composition selon l'une quelconque des revendications précédentes, contenant
60 à 80 % en poids du composant A,
15 à 35 % en poids du composant B,
2 à 8 % en poids du composant C et
0,2 à 10 % en poids du composant D.

10. Composition selon l'une quelconque des revendications précédentes, contenant, en tant que composant D, au moins un adjuvant choisi dans le groupe qui comprend des agents ignifugeants, des agents antigoutte, des synergistes d'ignifugation, des inhibiteurs de fumée, des agents lubrifiants et de démoulage, des agents de nucléation, des antistatiques, des additifs de conductivité, des stabilisants, des promoteurs de fluidité, des agents compatibilisants, d'autres modificateurs de résilience différents du composant B, d'autres partenaires de mélange polymériques, des charges et des matières de renforcement ainsi que des colorants et des pigments.

11. Composition selon l'une quelconque des revendications précédentes, la composition n'étant constituée que des composants A) à D).

12. Procédé pour la préparation d'une masse à mouler, **caractérisé en ce que** les ingrédients d'une composition selon l'une quelconque des revendications 1 à 11 sont mélangés ensemble à une température de 200 à 320 °C.

13. Masse à mouler obtenue ou pouvant être obtenue par un procédé selon la revendication 12.

14. Utilisation d'une composition selon l'une quelconque des revendications 1 à 11 ou d'une masse à mouler selon la revendication 13 pour la préparation de corps moulés thermoformés ou moulés par injection.

15. Corps moulé pouvant être obtenu à partir d'une composition selon l'une quelconque des revendications 1 à 11 ou d'une masse à mouler selon la revendication 13.
